# FASCICULE DE BREVET EUROPEEN

(11) **EP 1 022 953 B1**
(45) Date de publication et mention de la délivrance du brevet: **27.06.2001**
(21) Numéro de dépôt: 98949035.4
(22) Date de dépôt: 09.10.1998
(51) Int. Cl.: A21D 13/08, A23C 19/16, A23C 19/084

(54) **PRODUIT ALIMENTAIRE COMPOSITE A BASE DE FROMAGE ET DE BISCUIT ET PROCEDE DE FABRICATION**
AUF KÄSE UND BISKUIT BASIERENDES KOMPOSITNAHRUNGSMITTEL UND VERFAHREN ZU DESSEN HERSTELLUNG
COMPOSITE FOOD PRODUCT BASED ON CHEESE AND BISCUIT AND PREPARATION METHOD

(30) Priorité: 09.10.1997 FR 9712618
(43) Date de publication de la demande: 02.08.2000
(73) Titulaire: FROMAGERIES BEL, 75008 Paris (FR)
(72) Inventeur: VANDROUX, Valérie, F-39100 Dole (FR)
(74) Mandataire: Hirsch, Denise
(86) Numéro de dépôt international: FR9802174
(87) Numéro de publication internationale: WO9918804

(56) Documents cités:
- DE-A- 4 209 694
- DE-U- 8 712 352
- DE-U- 9 415 982
- FR-A- 2 743 698
- US-A- 5 405 625
- DATABASE WPI Section Ch, Week 9032 Derwent Publications Ltd., London, GB; Class D13, AN 90-243869 XP002067274 & JP 02 171153 A (MEIJI MILK PROD CO LTD)
- DATABASE WPI Section Ch, Week 9745 Derwent Publications Ltd., London, GB; Class D13, AN 97-484056 XP002067275 & JP 09 224580 A (TANAKA H)
- PATENT ABSTRACTS OF JAPAN vol. 016, no. 049 (C-0908), 7 février 1992 & JP 03 251145 A (SATOSHI KAWAGUCHI), 8 novembre 1991

## Description

La présente invention concerne une composition alimentaire à base de produit laitier et notamment de fromage. Elle concerne plus spécifiquement un produit alimentaire composite à base de fromage fondu et de biscuit ou produit biscuitier. Elle est également relative au procédé de fabrication dudit produit.

Dans la suite de la description, on désignera sous le terme "fromage fondu" ou "pâte fromagère fondue", les produit issus de la fonte de fromages ou de caillés d'origine lactique ou présure par traitement thermique, le cas échéant, en présence de sels de fonte.

Les matières premières d'origine laitière de départ sont choisies parmi les produits appartenant aux différentes variétés de fromages tels que les fromages à pâte molle, les fromages à pâte pressée cuite ou non, les fromages frais, les rétentats d'ultrafiltration, les caillés issus de la coagulation du lait de différentes espèces animales par action d'agents coagulants, tels que la présure ou par l'abaissement du pH jusqu'à son point isoélectrique par addition d'un agent acidifiant (ferments lactiques, acide alimentaire, glucono-delta-lactone).

On peut également ajouter à ces matières premières selon le produit final que l'on veut obtenir, de la poudre de lait écrémé ou non, du beurre ou des matières grasses végétales, de la poudre de lactosérum, des concentrés protéiques, des aromates et toute autre matière utilisée dans la formulation des fromages fondus. De façon avantageuse, le fromage fondu mis en oeuvre pour la réalisation de l'invention peut être foisonné selon les techniques bien connues de l'homme du métier.

On désignera par "biscuit" ou "produit biscuitier", les produits pâtissiers et/ou de panification à base de farine de céréales obtenus par des techniques traditionnelles de boulangerie/pâtisserie se caractérisant par une texture souple, homogène et élastique, un extrait sec compris entre 50 et 90 %, une activité de l'eau (Aw) d'au moins 0,6 et une aptitude à se réhumidifier sans perdre leurs caractéristiques organoleptiques et texturales. On peut citer, à titre d'exemples entrant dans cette catégorie, les produits connus sous les appellations : génoise, quatre-quarts, gâteau de Savoie, pâte à beignets, pâte à crêpe, gâteau fromager type "cheese cake"; les pâtes à pain font partie du domaine de l'invention.

Il existe dans le commerce des compositions alimentaires composées de produits pâtissiers ou biscuitiers fourrés avec des produits chocolatés et/ou sucrés divers. Ces produits se présentent communément sous la forme de barres. Ils sont considérés comme des produits de longue conservation commercialisés hors froid dans des linéaires de confiserie ou de snacking.

Plus récemment, sont apparus sur le marché, des produits dits "tendres", commercialisés dans les rayonnages frais (environ 5°C), composés d'un produit pâtissier ou biscuitier et d'un fourrage constitué de lait pasteurisé, poudre de lait, concentrés protéiques anhydre et matières grasses végétales, se caractérisant par un extrait sec supérieur à 70 %. Ces produits ont une durée de conservation d'environ 10 semaines. Ils se caractérisent par une activité de l'eau comprise entre 0,70 et 0,90.

Le fait d'utiliser comme fourrage un produit dont l'activité de l'eau est proche de celle du biscuit d'enrobage limite les transferts d'eau du fourrage vers le biscuit permettant ainsi la conservation du produit et le maintien de l'intégralité des propriétés organoleptiques des deux composants. De plus, le fourrage de ces produits contient des dépresseurs d'activité de l'eau limitant les transferts.

Par ailleurs, EP 687 420 décrit une composition alimentaire composite comprenant un biscuit et un fourrage constitué d'un produit laitier fermenté ou non, plus particulièrement à base de yaourt.

Le document décrit plus précisément un produit dans lequel les bactéries lactiques contenues dans le yaourt restent vivantes sans favoriser le développement de moisissures ou de levures de contamination. A cet effet, le fourrage (yaourt sous forme d'émulsion huile dans l'eau inversée) a une activité de l'eau comprise entre 0,75 et 0,86, le biscuit une activité de l'eau comprise entre 0,25 et 0,45 avant mise en contact, l'équilibre s'établissant au bout de sept jours pour aboutir à une Aw de 0,75 à 0,81.

Selon les auteurs du document, la composition alimentaire fait l'objet d'une migration d'eau contrôlée du fourrage vers le produit pâtissier. Toutefois, le fourrage contient une quantité de matière grasse végétale (huile de coprah) telle qu'elle permet l'obtention d'une émulsion et des dépresseurs d'activité de l'eau (sorbitol) afin de limiter la migration d'eau du fourrage "humide" vers le produit pâtissier, notamment si ce dernier doit garder des propriétés croquantes.

Le document D1= DE 94 15 982 U décrit un produit alimentaire frais de type "snack" constitué de fromage intercalé entre des couches de pâte.

On connaît également de FR 2 743 698 un produit composite formé d'un pain, lequel contient dans une cavité interne ménagée en son centre, une garniture riche en eau de type mets en sauce, les parois de la cavité interne étant tapissées de fromage à pâte fondue destiné à isoler de manière étanche la garniture humide logée dans cette cavité. Le fromage est déposé à froid dans la cavité, et mis à fondre par l'opération de cuisson de l'ensemble.

En outre, ce produit est destiné à une consommation rapide et ne peut être conservé à la température du frais (de 4 à 12°C) pendant une durée excédant quelques heures ou quelques jours sous atmosphère modifiée.

Généralement, l'ensemble des produits connus à ce jour est constitué d'une association de biscuit et de fourrage laitier dont l'Aw a été abaissée par l'ajout de sucre et généralement de dépresseurs d'Aw. Ces fourrages sont le plus souvent riches en matière grasse. De plus, les produits existants, excepté ceux appartenant à l'univers des "sandwiches", sont positionnés dans l'univers du sucré.

Il n'est pas connu d'association de biscuit avec du fromage, se présentant avantageusement sous forme de "snacks", appartenant à l'univers du salé et se conservant au rayon frais pendant au moins dix semaines.

L'invention a pour but de proposer au consommateur un produit composite constitué d'un biscuit et d'un produit laitier de type fromage qui se positionne dans l'univers du salé et qui se classe dans la catégorie des produits frais, c'est-à-dire un produit qui se conserve de 4 à 12°C pendant quelques semaines, de préférence au moins huit semaines.

L'invention a pour objet un produit alimentaire composite comprenant un biscuit et un fourrage à base d'un produit laitier à goût salé, consistant en un fromage fondu, dans lequel le biscuit a un extrait sec de 50 à 90 % et une activité de l'eau (Aw) avant contact d'au moins 0,6, de préférence d'au moins 0,8 et le fromage a un extrait sec de 20 à 80 % et une activité de l'eau avant contact supérieure à 0,95, ledit produit alimentaire composite étant obtenu par dépôt à chaud du fromage fondu sur le biscuit et étant équilibré à une activité de l'eau supérieure à 0,95,

L'activité de l'eau du biscuit est généralement comprise entre 0,6 et 0,95, de préférence 0,8 à 0,95 mais peut pour certaines formulations de biscuit aller au-delà de 0,95.

L'activité de l'eau d'un produit est une notion qui est bien connue dans le domaine alimentaire, cette mesure souvent abrégée sous forme de (Aw) mesure la disponibilité de l'eau dans un échantillon. Dans la plupart des cas, cette activité de l'eau n'est pas proportionnelle à la teneur en eau du produit.

A titre d'exemple, on peut mentionner :

| | |
|---|---|
| chocolat : environ 1 % d'eau | Aw : 0,50 |
| beurre : 16 % d'eau | Aw : 0,99 |
| Yaourt aux fruits : 82 % d'eau | Aw : 0,99 |
| Glycérol à 10 % dans l'eau | Aw : 0,95 |

Les méthodes permettant la mesure de l'Aw d'un produit sont connues de l'homme du métier.

De façon tout à fait inattendue, la Demanderesse a montré que l'utilisation de fromage fondu traditionnel ayant les caractéristiques ci-dessus décrites comme fourrage de produits biscuitiers choisis pour leurs caractéristiques physiques spécifiques telles que décrites ci-dessus, permettait d'obtenir sans addition de dépresseurs d'activité de l'eau, hormis les éléments constitutifs de matières premières pouvant rentrer de façon classique dans la formulation de fromage fondu (lactose ou additifs classiques (sel)) et jouant ce rôle, de nouveaux produits à consommer sous forme de snacks se conservant au moins huit semaines en linéaires frais à une température généralement comprise entre 4 et 12°C, sans qu'il soit nécessaire de les conditionner sous atmosphère modifiée, cette forme de conditionnement n'étant toutefois pas exclue afin d'allonger davantage la durée de vie du produit.

Le produit alimentaire composite selon l'invention est par conséquent caractérisé en ce qu'il consiste essentiellement en un biscuit ayant les caractéristiques exposées ci-dessus, et un fromage fondu tel que décrit ci-dessus pouvant contenir des éléments figurés et/ou des arômes, ou être foisonné.

Les produits composites selon l'invention de type "snacks" sont constitués avantageusement de 50 à 80 % de fromage fondu et de 20 à 50 % d'un produit biscuitier ayant une Aw de préférence d'au moins 0,8.

De préférence, le produit biscuitier est choisi de façon à avoir une Aw supérieure à 0,9, pouvant être d'au moins 0,95.

La réalisation de tels produits composites se conservant au frais au moins huit semaines a été rendue possible selon l'invention par la sélection et la mise en oeuvre du produit biscuitier aux caractéristiques physiques telles que décrites ci-dessus qui lui permettent de ne pas s'altérer au contact du fromage fondu. Le produit biscuitier est de préférence non sucré, présente une texture souple, homogène et élastique et est fabriqué par mélange et cuisson selon les techniques connues de l'homme du métier des ingrédients suivants: eau, farine de boulangerie/pâtisserie, oeuf, sel, conservateur autorisé par la réglementation tel que le propionate de calcium.

Avantageusement, le produit biscuitier comprend un produit fromager inclus dans la formulation de la pâte à biscuit.

Ces produits généralement de type "cheese-cake" ont une activité de l'eau supérieure à 0,90 et pouvant aller au-delà de 0,95.

Par produit biscuitier "non sucré", on entend un produit dans lequel hormis les glucides constitutifs des ingrédients de base. il n'a pas été ajouté de saccharose, ou d'édulcorant.

De même, le fromage fondu ne contient pas de saccharose ou de substitut de sucre (édulcorant) ajouté.

Le produit composite selon l'invention peut être préparé de la manière suivante :
un fromage fondu est préparé selon les technologies en vigueur bien connues de l'homme du métier, de préférence avec une teneur en matière grasse par rapport à l'extrait sec comprise entre 5 et 75 %.

La pâte fromagère obtenue peut être foisonnée et/ou aromatisée par addition d'ingrédients divers, arômes ou éléments figurés.

Elle est ensuite déposée à chaud à une température avantageusement comprise entre 70 et 95°C sur le biscuit décrit ci-dessus.

Après mise en contact des deux composants, il s'établit progressivement un équilibre dans les premiers jours entre les deux composants qui évoluera peu pendant toute la durée de conservation du produit. L'équilibre est atteint après une période de contact de l'ordre de cinq à sept jours. L'Aw à l'équilibre est supérieur à 0,95.

A titre d'exemple, un produit, composé d'un biscuit ayant un extrait-sec de 78 % et une Aw de 0,8 et d'un fromage fondu ayant un extrait sec de 43 % et une Aw de 0,97, atteint au bout de deux jours les valeurs suivantes : Es=46 % et Aw=0,97, valeurs qui restent stables au cours de la vie du produit.

De façon préférentielle, le produit final sera constitué d'une couche de fromage fondu comprise entre deux couches de biscuit mais toute autre forme d'association appartient au domaine de l'invention. On peut citer, à titre d'exemple, un produit type "millefeuille" constitué par l'alternance d'au moins deux couches de fromage fondu, et de trois couches de biscuit. un produit de type "roulé", dans lequel une couche de fromage fondu est coulée sur une couche de biscuit, le tout étant enroulé en spirale de façon à former des couches spiralées alternées de biscuit et de fromage fondu, et des produits fourrés où le fromage fondu est inclus entièrement dans le biscuit (chausson, par exemple).

La forme et le grammage du produit sont variables : de préférence, ils sont sous forme de parallélépipède cube, cylindre, sphère ou toute autre forme appropriée. Le grammage est compris entre 5 et 100 g, de préférence entre 5 et 50 g.

Les produits peuvent également présenter une décoration de surface(marquage ou éléments figurés).

L'invention a également pour objet un procédé de fabrication du produit selon l'invention. Le procédé se caractérise essentiellement par le dépôt direct du fromage fondu chaud sur le biscuit, selon les technologies en vigueur, pour le dépôt de fromage fondu à une température de 70 à 95°C, le produit étant découpé avant ou après dépôt du fromage fondu en portions de la taille voulue et conditionné avant ou après refroidissement.

Selon un premier mode de réalisation du procédé de l'invention, on découpe des parts de biscuit de taille et de forme appropriées à la forme du produit final que l'on veut obtenir ; on dépose les parts de biscuit dans des coquilles souples avantageusement en aluminium ou similaire, placées dans les alvéoles d'un plateau de conditionneuse utilisée traditionnellement pour le conditionnement de fromage fondu ; on coule le fromage fondu à chaud à une température comprise entre 70 et 95°C sur le biscuit ; on dépose une deuxième couche de biscuit ayant de préférence une forme identique à celle de la première couche de biscuit sur la couche de fromage fondu et on ferme par un couvercle la coquille souple, le tout formant l'emballage.

Le produit dans son emballage est alors refroidi et les portions regroupées dans des sur-emballages appropriés tels que des boîtes. des sachets ou tout autre conditionnement. La taille et la forme des portions sont variables et le grammage compris entre 5 et 100 g.

Selon un deuxième mode de réalisation du procédé de l'invention, le biscuit est découpé à la dimension du produit final souhaité et placé au fond d'une coupelle de dimension adaptée à la forme du morceau découpé. Le fromage fondu est coulé à chaud à une température comprise entre 70 et 95°C sur cette couche de biscuit, puis, une deuxième couche de biscuit de forme de préférence identique à la première est déposée sur la couche du fromage fondu. La coupelle est ensuite fermée à l'aide d'un opercule. L'ensemble est mis à refroidir puis est éventuellement regroupé dans un sur-emballage. De façon optimale, le conditionnement du produit dans la coupelle sera effectué sous atmosphère modifiée afin d'améliorer la durée de conservation du produit.

La forme et la taille de la coupelle sont variables et le grammage du produit compris entre 5 et 100 g. Le matériau de la coupelle est de préférence un matériau plastique déformable et présentant une dépouille favorable au démoulage.

Selon un troisième mode de réalisation de l'invention, on part de feuilles de biscuit de grande taille. On recouvre une première feuille d'une couche de fromage fondu à chaud avec une température de 70 à 95°C et on dépose sur cette couche une deuxième feuille de biscuit. Le tout est refroidi et éventuellement découpé en morceaux de dimensions et de formes appropriées et les portions obtenues emballées dans des emballages rigides (coupelles, etc) ou souples (films aluminium, etc). Les portions peuvent alors être regroupées pour commercialisation (par exemple, en chapelet). Les feuilles ont avantageusement des dimensions de l'ordre de 50 x 50 cm et une épaisseur de 0,5 cm.

Une alternative intéressante consiste à enrouler des plaques (feuilles) de biscuit sur lesquelles on a déposé un fourrage sur elles-mêmes de façon à obtenir un "roulé" et à découper transversalement des portions à la dimension souhaitée et à les emballer.

Selon un quatrième mode de réalisation, on coule la quantité souhaitée de fromage fondu chaud à une température de 70 à 95°C sur une première feuille de produit biscuitier chaud à la sortie du four de cuisson. On place une deuxième feuille de produit biscuitier chaud sur le fromage fondu chaud et on conditionne le tout après découpe éventuellement à la dimension voulue. Les produits emballés sont refroidis avant commercialisation.

Il est également possible de réaliser des produits, de type "millefeuille", dans lesquels les couches de biscuit et de fromage sont répétées.

Les modes de réalisation décrits ci-dessus permettent une excellente hygiène de fabrication et l'obtention de produits sains sur le plan microbiologique du fait de la mise en contact du fromage chaud avec le biscuit, du conditionnement réalisé "à chaud", le tout se déroulant en conditions aseptiques. Par ailleurs, les procédés utilisés sont ceux couramment employés en technologie de fabrication de fromage fondu, ce qui rend le procédé parfaitement automatisable.

De façon préférentielle, les produits finis sont conditionnés sous atmosphère modifiée de façon à allonger leur durée de conservation.

L'invention permet la production d'une vaste gamme de produits que l'on peut fabriquer dans de parfaites conditions d'hygiène qui présentent un intérêt certain pour le consommateur. En effet, l'invention permet d'offrir des produits de type "snacks", tels des barres positionnées dans l'univers du salé et alliant tous les bénéfices nutritionnels du fromage à ceux complémentaires des produits biscuitiers.

L'invention est illustrée par les exemples suivants.

### EXEMPLE 1 :

On fabrique un fromage fondu selon les technologies traditionnelles de fonte dont les caractéristiques sont les suivantes :
- ES 48 %
- Teneur en matière grasse par rapport à l'extrait sec 55 %
- Aw 0,98.

Ce produit est obtenu par la mise en oeuvre des matières premières suivantes :
- Emmental 32 %
- Cheddar 25 %
- Beurre 10 %
- Sels de fonte (polyphosphates de sodium) 2,5 %
- Chlorure de sodium 0,5 %
- Eau QSP à 100%
et un traitement thermique de 110°C pendant deux minutes.

Le fromage fondu chaud a une température de 90°C quand il est transféré après passage dans une cuve tampon dans la trémie de conditionneuses traditionnelle de fonte, par exemple commercialisées par la firme CORAZZA.

Simultanément, sont acheminées vers cette conditionneuse des parts de génoise se caractérisant par une Aw de 0,8 et un ES de 78 % prédécoupées à la dimension du produit réel souhaité, soit en rectangle de 3 x 6 cm.

Les deux produits sont placés consécutivement dans une coquille d'aluminium déposée sur le plateau de la conditionneuse. Dans un premier mouvement, on place un morceau de génoise au contact de l'aluminium, on coule dessus la dose nécessaire de fromage à 85°C soit environ 25 g, puis on dépose une deuxième tranche de génoise ayant les mêmes dimensions et la même forme que la première, puis un couvercle d'aluminium et on vient refermer la portion par pliage et soudure avec la coquille.

Les portions obtenues sont alors regroupées par cinq dans une boîte pour la vente au consommateur.

A cinq jours, il s'est établi un équilibre entre les Aw de chaque produit pour atteindre une Aw de 0,96. Ce produit peut être conservé plusieurs semaines entre 4 et 8°C sans altération des caractéristiques organoleptiques des deux composants.

### EXEMPLE 2 :

On prépare un fromage fondu selon une technologie traditionnelle de fonte dont les caractéristiques sont les suivantes
- ES 30%
- GIS 25 %
- Aw 0,98.

Ce produit est obtenu par la mise en oeuvre des matières premières suivantes :
- Emmental 25 %
- Poudre de lait maigre 12 %
- Sels de fonte 2,5 %
- Chlorure de sodium 0,5 %
- Eau QSP 100 %
et un traitement thermique de 140°C pendant cinq secondes.

Avant transfert sur la machine de conditionnement, la pâte chaude subit un foisonnement par passage sur foisonneur Mondomix® pour obtenir un taux de foisonnement de 20 %.

Le produit moussé est acheminé à chaud à 80°C dans la trémie de la machine de conditionnement de type ®Illig.

Simultanément, on achemine vers cette dernière des morceaux prédécoupés de gâteau fromager fabriqué selon le procédé suivant :
- Mélange des ingrédients suivants (en poids) :
   - Caillé lactique de fromagerie 70 %
   - Sucre 10 %
   - Farine 10 %
   - Protéines de lait fonctionnalisées 10 %
- Cuisson du mélange à 180°C pendant 30 minutes.

Ce produit obtenu a une Aw de 0,9 et un extrait sec de 70 %.

On place un premier morceau de gâteau fromager dans une mini-barquette de dimension 5 x 5 cm, placée dans une alvéole du plateau de conditionnement, on coule à chaud à 75°C une dose nécessaire de fromage fondu foisonné (20 g) sur cette couche de gâteau fromager, puis on redépose sur le fromage chaud un deuxième morceau de gâteau fromager et on ferme à l'aide d'un opercule la mini-barquette après injection d'azote pour améliorer la conservation.

L'équilibre entre les produits est atteint au bout de trois jours et l'Aw s'établit à 0,96. Le produit obtenu se conserve huit semaines entre 4 et 8°C.

Une alternative à ce produit consiste à réaliser un "millefeuille" par alternance de cinq couches de pâte à pain et de trois couches de fromage fondu.

### EXEMPLE 3 :

On coule le fromage fondu chaud selon la formulation de l'exemple 1 sur une feuille de produit biscuitier de l'exemple 1, chaud sortant du four de cuisson. On dépose sur le fromage chaud une deuxième feuille de produit biscuitier sortie d'une autre four de cuisson. On découpe le produit obtenu et on conditionne les parts sous sachets du type "flow-pack".

## Revendications

1. Produit alimentaire composite comprenant un biscuit et un fourrage à base d'un produit laitier à goût salé, consistant en un fromage fondu, dans lequel le biscuit a un extrait sec de 50 à 90 % et une activité de l'eau (Aw) avant contact d'au moins 0,6, de préférence d'au moins 0,8 et le fromage a un extrait sec de 20 à 80 % et une activité de l'eau avant contact supérieure à 0,95, ledit produit alimentaire composite étant obtenu par dépôt à chaud du fromage fondu sur le biscuit et étant équilibré à une activité de l'eau supérieure à 0,95.

2. Produit alimentaire composite selon la revendication 1, caractérisé en ce que le fromage fondu est exempt de dépresseurs de l'activité de l'eau.

3. Produit alimentaire composite selon la revendication 1 ou 2, caractérisé en ce que la pâte fromagère fondue représente 50 à 80 % du produit final et le biscuit 20 à 50 % du produit final.

4. Produit alimentaire composite selon l'une quelconque des revendications précédentes, caractérisé en ce que le produit alimentaire composite est obtenu en coulant à chaud une pâte fromagère fondue sur le biscuit.

5. Produit alimentaire composite selon l'une quelconque des revendications précédentes, caractérisé en ce que l'équilibre de l'activité de l'eau est atteint, après une période de contact inférieure à sept jours.

6. Produit alimentaire composite selon l'une quelconque des revendications précédentes, caractérisé en ce que le fromage fondu est obtenu par fonte; sous traitement thermique en présence ou non de sels de fonte, de fromages, de caillés frais et éventuellement d'autres ingrédients.

7. Produit alimentaire composite selon l'une quelconque des revendications précédentes, caractérisé en ce que le fromage fondu est foisonné.

8. Produit alimentaire composite selon l'une quelconque des revendications précédentes, caractérisé en ce que le fromage fondu est aromatisé.

9. Produit alimentaire composite selon l'une quelconque des revendications précédentes, caractérisé en ce que le biscuit est choisi parmi les produits biscuités ou de panification non croquants, à texture souple, homogène et élastique ayant un extrait sec compris entre 50 et 90 % et une activité de l'eau d'au moins 0,6, de préférence d'au moins 0,8 et possédant une aptitude à la réhumidification sans altération de leurs propriétés organoleptiques et texturales.

10. Produit alimentaire composite selon l'une quelconque des revendications précédentes, caractérisé en ce que le biscuit est un biscuit contenant un produit fromager inclus dans la formulation de la pâte, le biscuit ayant une activité de l'eau supérieure à 0,90.

11. Produit alimentaire composite selon l'une quelconque des revendications précédentes, caractérisé en ce qu'il est composé d'au moins une couche de fromage fondu comprise entre deux couches de biscuit.

12. Produit alimentaire composite selon l'une quelconque des revendications précédentes, caractérisé en ce que son grammage est compris entre 5 et 100 g, de préférence 5 à 50 g.

13. Procédé de fabrication d'un produit alimentaire composite selon les revendications 1 à 12, caractérisé en ce que le fromage fondu est coulé directement sur le biscuit à une température comprise entre 70 à 95°C.

14. Procédé de fabrication selon la revendication 13, caractérisé par les étapes consistant à placer une première couche de biscuit dans une coquille souple, couler le fromage fondu à une température de 70 à 95°C sur la couche de biscuit, recouvrir le fromage fondu d'une deuxième couche de biscuit, éventuellement répéter les étapes de coulée du fromage et de recouvrement avec une nouvelle couche de biscuit, et fermer la coquille souple par un couvercle, le tout formant emballage.

15. Procédé de fabrication selon la revendication 13, caractérisé par les étapes consistant à placer une première couche de biscuit au fond d'une coupelle, couler le fromage fondu à une température de 70 à 95°C sur la première couche de biscuit, recouvrir le fromage avec une deuxième couche de biscuit, éventuellement répéter les étapes de coulée du fromage et de recouvrement avec une nouvelle couche de biscuit et fermer la coupelle à l'aide d'une opercule.

16. Procédé de fabrication selon la revendication 13, caractérisé par les étapes consistant à recouvrir une première feuille de biscuit d'une couche de fromage fondu chaud à une température de 70 à 95°C, déposer sur cette couche de fromage une deuxième feuille de biscuit, éventuellement répéter les étapes de coulée du fromage et de recouvrement avec une nouvelle couche de biscuit, refroidir l'ensemble et découper le produit obtenu en morceaux de dimensions souhaitées.

17. Procédé de fabrication selon la revendication 13, caractérisé par les étapes consistant à déposer sur une première feuille de biscuit chaud à une température de 70 à 95°C, une couche de fromage chaud à une température de 70 à 95°C, recouvrir la couche de fromage fondu chaud d'une seconde feuille de biscuit chaud à une température de 70 à 95°C, éventuellement répéter. les étapes de coulée du fromage et de recouvrement avec une nouvelle couche de biscuit et laisser refroidir l'ensemble et éventuellement découper le produit obtenu en morceaux de dimensions souhaitées.

## Claims

1. Composite food product comprising a biscuit and a covering based on a savoury dairy product, consisting of a melted cheese, in which the biscuit has a dry extract of 50 to 90 % and a water activity (Aw) before contact of at least 0.6, preferably of at least 0.8 and the cheese has a dry extract of 20 to 80 % and a water activity before contact greater than 0.95, the said composite food product being obtained by depositing melted cheese hot on the biscuit and reaching equilibrium at a water activity greater than 0.95.

2. Composite food product according to Claim 1, characterised in that the melted cheese is free from water activity depressing agents.

3. Composite food product according to Claim 1 or 2, characterised in that the melted cheese mix represents 50 to 80 % of the final product and the biscuit 20 to 50 % of the final product.

4. Composite food product according to any one of the foregoing claims, characterised in that the composite food product is obtained by pouring a melted cheese mix hot onto the biscuit.

5. Composite food product according to any one of the foregoing claims, characterised in that the equilibrium in water activity is reached after a contact period of less than seven days.

6. Composite food product according to any one of the foregoing claims, characterised in that the melted cheese is obtained by pressing, under thermal treatment, in the presence or not, of cheese-maker's salts, fresh curds and possibly other ingredients.

7. Composite food product according to any one of the foregoing claims, characterised in that the melted cheese is swelled or expanded.

8. Composite food product according to any one of the foregoing claims, characterised in that the melted cheese is flavoured.

9. Composite food product according to any one of the foregoing claims, characterised in that the biscuit is chosen from amongst the biscuit products or non-crispy bread-based materials, of supple, homogeneous and elastic texture having a dry extract lying between 50 and 90 % and a water activity of at least 0.6, preferably of at least 0.8 and having a readiness to re-humidification without alteration of their organoleptic and textural properties.

10. Composite food product according to any one of the foregoing claims, characterised in that the biscuit is a biscuit containing a cheese product included in the formulation of the mix, the biscuit having a water activity greater than 0.90.

11. Composite food product according to any one of the foregoing claims, characterised in that it is composed of at least one layer of melted cheese lying between two layers of biscuit.

12. Composite food product according to any one of the foregoing claims, characterised in that its weight lies between 5 and 100 g, preferably 5 to 50 g.

13. Method of making a composite food product according to Claims 1 to 12, characterised in that the melted cheese is poured directly onto the biscuit at a temperature lying between 70 to 95° C.

14. Method of manufacture according to Claim 13, characterised by the steps comprising placing a first layer of biscuit in a flexible mould, pouring the melted cheese onto the biscuit layer at a temperature of 70 to 95° C, covering the melted cheese with a second layer of biscuit, possibly repeating the steps of pouring the cheese and covering with a further layer of biscuit, and closing the mould with a lid, the whole forming a package.

15. Method of manufacture according to Claim 13, characterised by the steps comprising placing a first layer of biscuit on the floor of a tray, pouring the melted cheese onto the first layer of biscuit at a temperature of a 70 to 95° C, covering the cheese with a second layer of biscuit, possibly repeating the steps of pouring the cheese and covering with a further layer of biscuit and closing the tray with the aid of a cover.

16. Method of manufacture according to Claim 13, characterised by the steps comprising covering a first leaf of biscuit with a layer of melted cheese at a temperature of 70 to 95° C, depositing on this layer of cheese a second leaf of biscuit, possibly repeating the steps of pouring the cheese and covering with a further layer of biscuit, cooling the assembly and cutting up the resulting product into pieces of the desired dimensions.

17. Method of manufacture according to Claim 13, characterised by the steps comprising depositing on a first leaf of biscuit hot at a temperature are of 70 to 95° C a layer of hot cheese at a temperature of 70 to 95° C, covering the layer of hot melted cheese with a second leaf of hot biscuit at a temperature of 70 to 95° C, possibly repeating the steps of pouring the cheese and covering with a further layer of biscuit and allowing the assembly to cool and possibly cutting up the resulting product into pieces of the desired dimensions.

## Patentansprüche

1. Zusammengesetztes Nahrungsmittelprodukt umfassend ein Gebäck und eine Füllung auf der Grundlage eines Milchprodukts mit salzigem Geschmack, bestehend aus einem Schmelzkäse, worin das Gebäck einen Trockenextrakt von 50 bis 90 % und eine Wasseraktivität (Aw) vor dem Kontakt von mindestens 0,6, vorzugsweise mindestens 0,8, und der Käse einen Trockenextrakt von 20 bis 80 % und eine Wasseraktivität vor dem Kontakt von mehr als 0,95 besitzen, wobei das zusammengesetzte Nahrungsmittelprodukt durch Aufbringen des Schmelzkäses in der Wärme auf das Gebäck hergestellt und auf eine Wasseraktivität von mehr als 0,95 äquilibriert worden ist.

2. Zusammengesetztes Nahrungsmittelprodukt nach Anspruch 1, dadurch gekennzeichnet, daß der Schmelzkäse frei ist von die Wasseraktivität herabsetzenden Bestandteilen.

3. Zusammengesetztes Nahrungsmittelprodukt nach Anspruch 1 oder 2, dadurch gekennzeichnet, daß der Schmelzkäseteig 50 bis 80 % des Endprodukts und das Gebäck 20 bis 50 % des Endprodukts ausmachen.

4. Zusammengesetztes Nahrungsmittelprodukt nach einem der vorhergehenden Ansprüche, dadurch gekennzeichnet, daß das zusammengesetzte Nahrungsmittelprodukt dadurch hergestellt worden ist, daß man einen Schmelzkäseteig in der Wärme auf das Gebäck fließen läßt.

5. Zusammengesetztes Nahrungsmittelprodukt nach einem der vorhergehenden Ansprüche, dadurch gekennzeichnet, daß das Gleichgewicht der Wasseraktivität nach einer Kontaktdauer von weniger als sieben Tagen erreicht ist.

6. Zusammengesetztes Nahrungsmittelprodukt nach einem der vorhergehenden Ansprüche, dadurch gekennzeichnet, daß der Schmelzkäse durch Schmelzen von Käse, frischem Käsebruch und gegebenenfalls weiteren Bestandteilen unter thermischer Behandlung gegebenenfalls in Gegenwart von Schmelzsalzen hergestellt worden ist.

7. Zusammengesetztes Nahrungsmittelprodukt nach einem der vorhergehenden Ansprüche, dadurch gekennzeichnet, daß der Schmelzkäse aufgeschlagen worden ist.

8. Zusammengesetztes Nahrungsmittelprodukt nach einem der vorhergehenden Ansprüche, dadurch gekennzeichnet, daß der Schmelzkäse aromatisiert ist.

9. Zusammengesetztes Nahrungsmittelprodukt nach einem der vorhergehenden Ansprüche, dadurch gekennzeichnet, daß das Gebäck ausgewählt ist aus nicht-knusprigen Biskuitprodukten oder Brotprodukten mit weicher, homogener und elastischer Struktur, die einen Trockenextrakt zwischen 50 und 90 % und eine Wasseraktivität von mindestens 0,6, vorzugsweise mindestens 0,8 besitzen und die Fähigkeit der Wiederbefeuchtung ohne Veränderung ihrer organoleptischen und Textureigenschaften aufweisen.

10. Zusammengesetztes Nahrungsmittelprodukt nach einem der vorhergehenden Ansprüche, dadurch gekennzeichnet, daß das Gebäck ein Biskuit ist, welches ein Käseprodukt in der Zubereitung des Teiges aufweist, wobei das Gebäck eine Wasseraktivität von mehr als 0,90 besitzt.

11. Zusammengesetztes Nahrungsmittelprodukt nach einem der vorhergehenden Ansprüche, dadurch gekennzeichnet, daß es aus mindestens einer Schicht aus Schmelzkäse, die zwischen zwei Gebäckschichten vorliegt, gebildet ist.

12. Zusammengesetztes Nahrungsmittelprodukt nach einem der vorhergehenden Ansprüche, dadurch gekennzeichnet, daß sein Gewicht zwischen 5 und 100 g, vorzugsweise zwischen 5 und 60 g liegt.

13. Verfahren zur Herstellung eines zusammengesetzten Nahrungsmittelprodukts nach den Ansprüchen 1 bis 12, dadurch gekennzeichnet, daß der Schmelzkäse direkt bei einer Temperatur zwischen 70 und 95°C auf das Gebäck gegossen wird.

14. Herstellungsverfahren nach Anspruch 13, gekennzeichnet durch die Stufen des Einbringens einer ersten Gebäckschicht in eine weiche Schale, Aufgießen des Schmelzkäses bei einer Temperatur von 70 bis 95°C auf die Gebäckschicht, Bedecken des Schmelzkäses mit einer zweiten Gebäckschicht, gegebenenfalls Wiederholung der Maßnahmen des Aufgießens des Käses und des Bedeckens mit einer neuen Gebäckschicht und Verschließen der weichen Schale mit einem Deckel, wodurch die Verpackung gebildet wird.

15. Herstellungsverfahren nach Anspruch 13, gekennzeichnet durch die Stufen des Einbringens einer ersten Gebäckschicht auf den Boden eines Tiegels, Aufgießen des Schmelzkäses bei einer Temperatur von 70 bis 95°C auf die erste Gebäckschicht, Bedecken des Käses mit einer zweiten Gebäckschicht, gegebenenfalls Wiederholen der Maßnahmen des Aufgießens des Käses und des Bedeckens mit einer neuen Gebäckschicht und Verschließen des Tiegels mit Hilfe eines Dekkels.

16. Herstellungsverfahren nach Anspruch 13, gekennzeichnet durch die Stufen des Bedeckens eines ersten Gebäckblattes mit einer Schicht aus warmem Schmelzkäse bei einer Temperatur von 70 bis 95°C, Aufbringen eines zweiten Gebäckblattes auf diese Käseschicht, gegebenenfalls Wiederholen der Maßnahmen des Aufgießens des Käses und des Bedeckens mit einer neuen Gebäckschicht, Abkühlen des Ganzen und Zerschneiden des erhaltenen Produkts in Stücke mit den gewünschten Abmessungen.

17. Herstellungsverfahren nach Anspruch 13, gekennzeichnet durch die Maßnahmen des Abscheidens einer Schicht aus warmem Käse mit einer Temperatur von 70 bis 95°C auf ein erstes warmes Gebäckblatt mit einer Temperatur von 70 bis 95°C, Bedecken der Schicht des warmen Schmelzkäses mit einem zweiten warmen Gebäckblatt mit einer Temperatur von 70 bis 95°C, gegebenenfalls Wiederholen der Maßnahmen des Aufgießens des Schmelzkäses und des Bedeckens mit einer neuen Gebäckschicht und Abkühlen des Ganzen und gegebenenfalls Zerschneiden des erhaltenen Produkts in Stücke mit den gewünschten Abmessungen.
